# EUROPEAN PATENT SPECIFICATION

(11) **EP 2 251 266 B1**
(45) Date of publication and mention of the grant of the patent: **14.12.2011**
(21) Application number: 09172332.0
(22) Date of filing: 06.10.2009
(51) Int. Cl.: B65B 7/28, B65B 43/44, B65G 59/10

(54) **Lidding machine, particularly for trays and baskets made of deformable material and the like**
Maschine zum Anbringen von Deckeln, insbesondere für Schalen und Körbe aus deformierbarem Material und dergleichen
Machine de couvercle, particulièrement pour des barquettes et des paniers fabriqués en matériau déformable et similaire

(30) Priority: 13.05.2009 IT AR20090025
(43) Date of publication of application: 17.11.2010
(73) Proprietor: Tiber Pack, S.r.l., 52037 Sansepolcro (AR) (IT)
(72) Inventor: Ceci, Maurizio, 52037 Sansepolcro (AR) (IT)
(74) Representative: Modiano, Micaela Nadia

(56) References cited:
- EP-A1- 0 018 733
- WO-A1-97/21591
- US-A- 3 275 189
- US-A- 3 383 834
- US-A- 4 098 058
- US-A- 4 122 649
- US-A- 4 231 209
- US-A- 4 420 924
- US-A- 4 513 878
- US-A- 4 805 372

## Description

The present invention relates to a lidding machine for trays and baskets made of deformable material and the like.

Lidding machines are known for closing bases made of deformable material, such as for example trays and baskets made of plastics, which are particularly adapted to contain fruit, vegetables and other types of loose food. These devices have belts for the advancement of the bases toward a working head, which has the task of picking up a lid, which is accommodated in a lid magazine, and placing it on top of the base to be closed.

However, machines of this type require accurate control on the part of assigned personnel, because the mating of the lid and of the respective base is very difficult due to the extreme deformability of the lid.

Moreover, the lids are normally stacked together, and this entails various problems in separating them from each other, both due to their shape, provided with contours that tend to make them interlock with each other, and due to induced electrostatic phenomena which are typical of plastics.

For this reason, in the background art, lidding machines have an efficiency that varies between 25 and 40 finished products per minute and usually require several people assigned to controlling and arranging the lids that do not work, with consequent cost problems.

The aim of the present invention is to eliminate the drawbacks cited above in known types of lidding machines, for trays and baskets made of deformable material and the like, which allows quick and safe mating between the base and the lid, limiting the intervention of assigned personnel.

Examples of lidding machines for applying lids to boxes are available from documents US 4 420 924 and US 3 383 834.

Within this aim, an object of the invention is to provide a lidding machine for trays and baskets made of deformable material and the like that makes it possible to increase the production rate.

Another object of the invention is to provide a lidding machine for trays and baskets made of deformable material and the like with easily commercially available means and by using common materials, so that the device is economically competitive.

This aim, these objects and others which will become better apparent hereinafter are achieved by a lidding machine , according to the invention, that has the features set forth in claim 1.

Further characteristics and advantages of the invention will become better apparent from the following detailed description of a preferred but not exclusive embodiment of the lidding machine for trays and baskets made of deformable material and the like, illustrated by way of non-limiting example with the aid of the accompanying drawings, wherein:
Figure 1 is an elevation view of the device;
Figure 2 is a perspective view of the grip and release head;
Figure 3 is an enlarged-scale view of Figure 1, with a cutout of one of the contrast side walls;

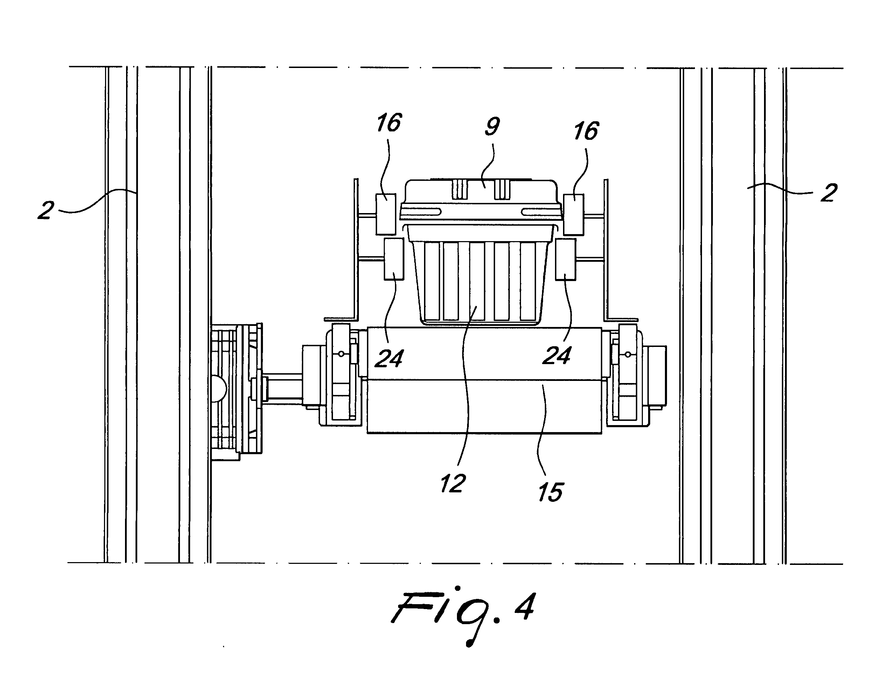

Figure 4 is a sectional view of the device taken along the line IV-IV of Figure 1;
Figure 5 is a sectional view of another embodiment of the device taken along the line IV-IV of Figure 1;
Figure 6 is a view of a detail of the upper abutment belt in another embodiment of the device;
Figure 7 is an elevation view of another embodiment of the interlocking region;
Figure 8 is a view of a detail of the interlocking region of Figure 7.

With reference to the figures, a lidding machine for trays and baskets made of deformable material and the like, according to the invention, generally designated by the reference numeral 1, comprises a supporting frame 2 for a head 3 for gripping and releasing lids which are accommodated in a lid magazine 11 and a conveyor belt 15 for the advancement of bases 12 to be closed.

A characteristic of the lidding machine is that it comprises elastic deformation means for the lids, in order to separate a lid 9 from the overlying lid of the lid magazine 11. The elastic deformation means are connected to the head 3 and are controlled by the actuation of means 4 for gripping the lids connected to the grip and release head 3.

Normally, the grip means 4 consist of two suckers, which act symmetrically on the upper part of each lid.

Preferably, the head 3 has at least one movable element 14 that supports the grip means 4. The element 14 can be connected to an oscillating body 13 by way of lifting and lowering means 6. The oscillating body 13 advantageously has means for rotation about a rotation axis 10. The axis 10 is substantially parallel to the plane of arrangement of the conveyor belt 15.

In this embodiment, the lifting and lowering means 6 comprise a fluid-operated piston.

Preferably, the machine can comprise a series of movable elements 14, each of which is provided with the means 4, one element being symmetrically opposite the other relative to the rotation axis 10.

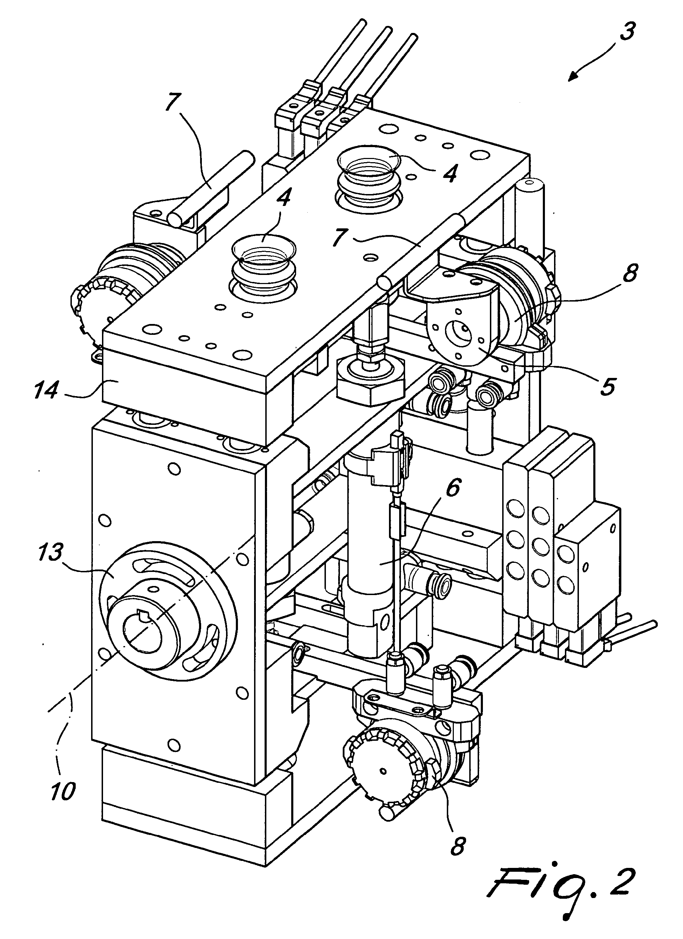

In the embodiment described here, with reference to Figure 2, the head 3 has two movable elements 14, which are arranged at 180° with respect to each other, so that when the first element 14 is releasing the lid 9, the grip means of the second support engage the subsequent lid of the magazine 11, the one that was located above the lid 9.

Advantageously, the elastic deformation means comprise at least two squeezing elements 7, which act on two mutually opposite sides of the lid 9 and are actuated by movement means which are connected to the body 3.

Preferably, said movement means have at least one rotating piston 8, which is actuated by the activation of the grip means 4.

Each one of the squeezing means 7 can have a support 5, which is jointly associated with the rotating head of the piston 8. In the embodiment proposed here, the support 5 is fixed to the piston 8 by screws or similar means.

Preferably, there are means for sensing the actuation of the grip means 4, which actuate the squeezing elements 7 or other elastic deformation means.

As an alternative to the sensor means, it is also possible to provide a time-based control (timer), which is activated by the actuation of the grip means 4 and is used as a control for the elastic deformation means.

During normal operation, after the suckers have engaged the lid 9 by the lifting of the fluid-operated piston, the presser members, actuated by the rotating piston 8, deform, the side walls of the lid 9. In this manner, the lid 9 separates completely from the overlying lid and is thus able to exit from the lid magazine.

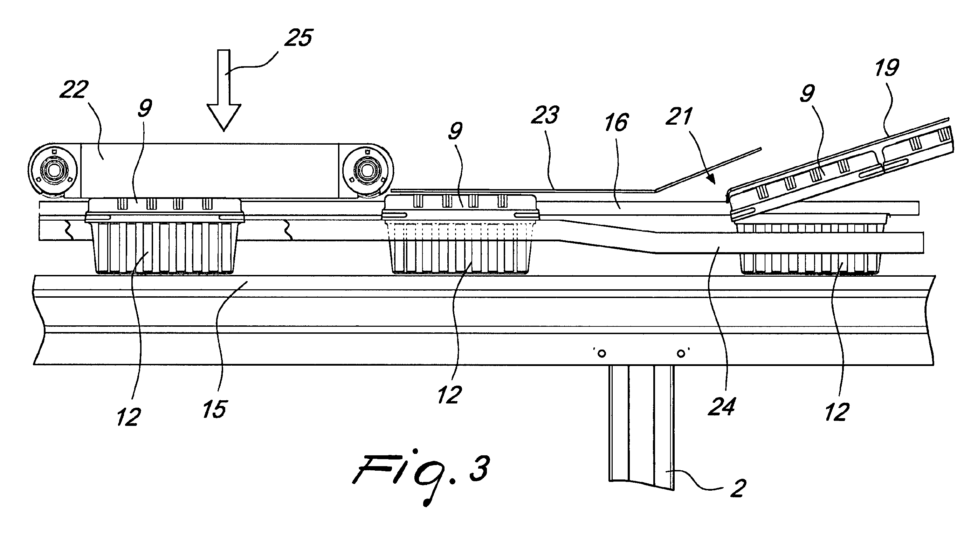

According to the invention means are provided for conveying the lids to a chute 17, such as for example a conveyance belt 18 that lies above the belt 15 (see Figure 3). Further, the machine has a pair of side walls 16 for guiding the bases 12 along the advancement direction 20.

For facilitating the descent of the lids from the belt 18 along the chute 17, there is at least one tube that dispenses air at the base of the chute 17. Accordingly, a jet of air exits from the tube and pushes the lids.

The chute 17 forms, proximately to the points where it meets the side walls 16, an interlocking region 21 for the mating of a first portion of each lid with a first portion of the corresponding base to be closed.

There is also an upper abutment belt 22 for the lids, which allows the complete mating of each lid with the corresponding base to be closed. The belt 22 is designed to push the lid in a sealing direction 25, which is substantially normal to the advancement direction 20.

Another solution can have two belts 22 which have smaller dimensions than the belt 22 and are parallel to the direction 20.

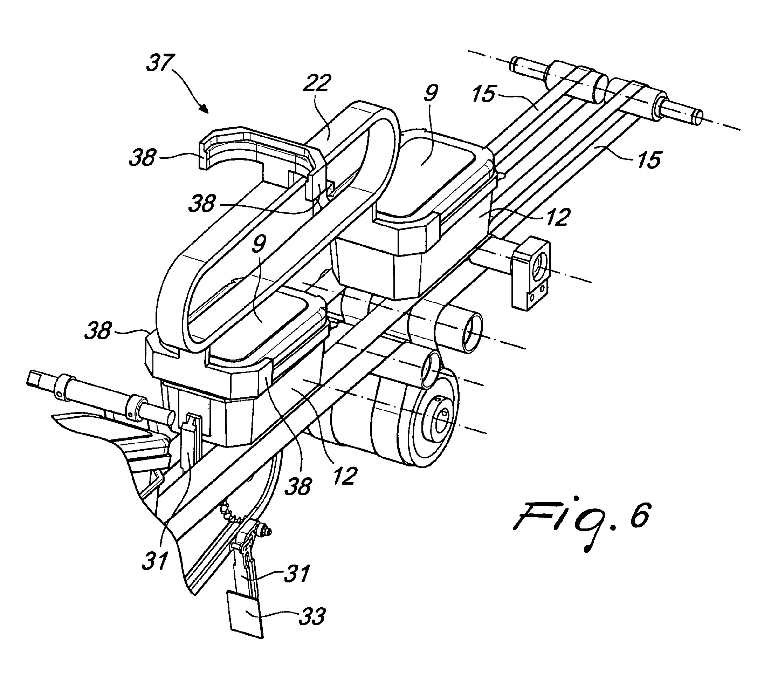

With reference to Figure 6, the upper abutment belt 22 has means 37 for compressing the perimetric edge onto the upper flaps of the corresponding base to be closed.

Preferably, the compression means 37 can comprise interlocking corners 38, which are jointly associated with the upper abutment belt 22 and engage at the corner portion of the lids 9.

A roof 23 can be provided for keeping the lids stable during their advancement from the region 21 to the belt 22.

Advantageously, the device has at least two contrast side walls 24 for contrasting the perimetric edge of each lid when said lid 9 is pushed in the scaling direction 25 by the abutment belt 22. The side walls 24 guide the bases 12 along the advancement direction 20, ensuring that the lids and the bases are mutually aligned so as to provide perfect mating.

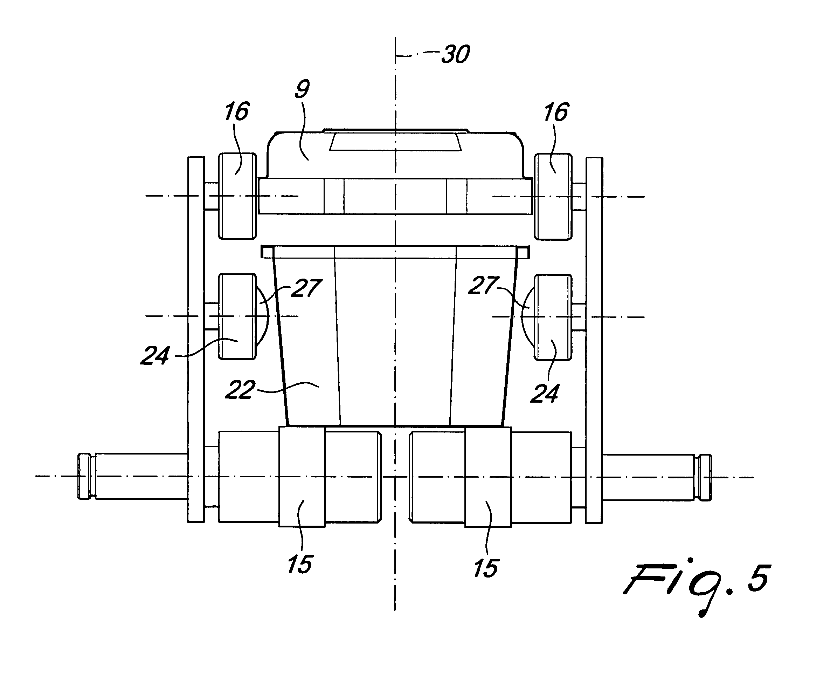

Preferably, the contrast side walls 24 have a squeezing element 27 for the side walls of the bases 12. With reference to Figure 5, the element 27 can be provided by means of a shim that is formed on the surface of the side wall 24 that faces the side walls of the bases 12.

The chute 17 has first lateral guides 19 for directing the lids, which run parallel to the chute on its sides.

Likewise, the belt 22 can have, on its sides, second lateral guides that run parallel to the direction 20.

Advantageously, means for varying the advancement speed of the bases 12 are provided and are connected to the conveyor belt 15.

In the solution shown here, said means comprise a belt 26 for distributing the bases 12 being fed to the belt 15.

Advantageously, the lidding machine comprises at least one element 28 for the complementary abutment of each lid on the corresponding base to be closed, in order to interlock the lids 9 with the bases 12. The complementary abutment element 28 is connected to the conveyor belt 15.

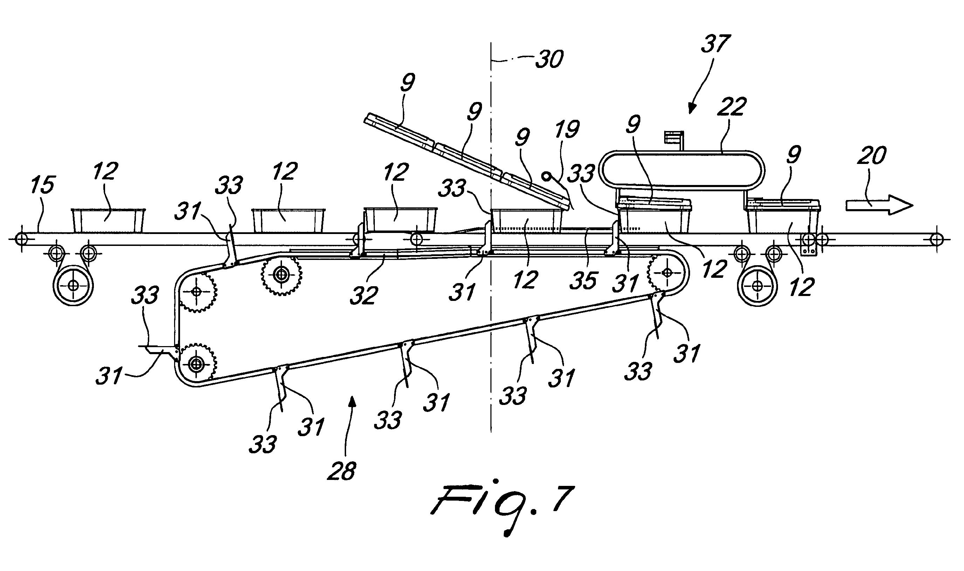

With reference to Figure 7, the complementary abutment element 28 preferably has at least one flight 31 for pushing the bases 12 along the advancement direction 20. The flight 31 is jointly associated with motor means, such as for example a belt 32.

In the embodiment described here, since the belt 32 is arranged in a central position with respect to the plane formed by the base resting surface 12, it overlaps a central portion of the belt 15, which therefore is eliminated.

Advantageously, the complementary abutment element 28 can be provided with height adjustment means 35 which are connected to the flight 31.

Preferably, the height adjustment means 35 can comprise a movable flap 33, which engages slidingly a slot 34 along a direction 30 that is normal to the advancement direction 20. The slot 34 is formed on a surface of the flight 31 and the movable flap 33 is coupled, at its lower edge, with a guiding element 35 so as to slide for the abutment of the upper edge of said flap against the perimetric edge of the lid.

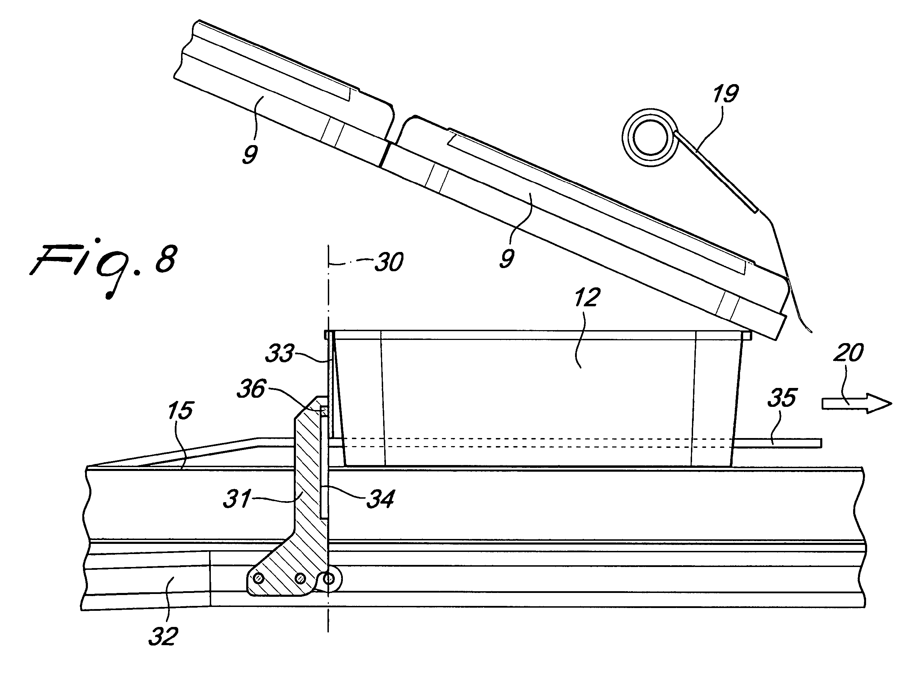

With reference to Figure 8, the sliding of the flap 33 on the slot 34 takes place by means of the male element 36, which engages the slot 34.

The guiding element 35 can be provided for example with a smooth supporting bar, which allows the flap to rise until it abuts and then to return by gravity to the inactive position when it no longer finds the supporting bar.

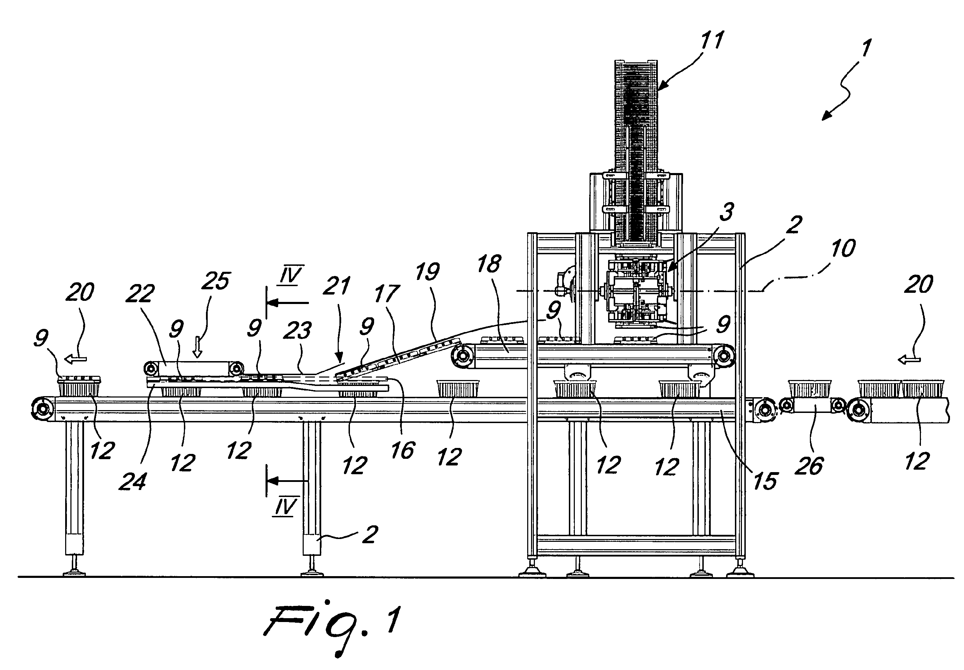

With reference to Figures 1 and 3, when the lid is released by the head 3 the belt 18 conveys it toward the chute 17, which ends in the interlocking region 21.

At the same time, the bases 12 are introduced on the belt 15 by the distribution belt 26, which by having a higher peripheral speed than the belt 15 allows them in practice to advance so that they are appropriately spaced from each other.

The bases 12 therefore advance on the belt 15 at a higher speed than the chute 17 is provided with toward the region 21, which passes below the conveyance belt 18, guided by the side walls 24 along the direction 20.

The bases 12 can also advance by being pushed by the flights 31.

The side walls 24 ensure that the lid 9 arrives at the interlocking region 21 in a perfect position for the mating of its front part with the front part of the respective base to be closed.

The squeezing element 27 facilitates this mating by means of the compression of the side walls of the bases 12.

The flap 33, pushed by the element 35, slides on the slot 34 formed in the flight 31 and acts as a complementary abutment against the perimetric edge of the lid. In this manner, even if the thickness of the plastics is not sufficient to ensure a certain stiffness, the base is not deformed and the interlocking with the lid occurs without problems.

To complete the mating and therefore ensure optimum closure, the lid and the base are both conveyed by the belt 15 along the advancement direction 20 toward the upper abutment belt 22. The belt 22 pushes the upper part of the lid toward the sealing direction 25. However, perfect lid-base axiality is ensured by the contrast of the perimetric edge of the lid against the side walls 24.

The interlocking corners 38 compress the angular portion of the lid so as to not cause deformations on the central part of the lid, which is normally less strong.

Moreover, the side walls 24 can have a profile that is suitable for the substantially coplanar arrangement of the perimetric edge of the lid with respect to the perimeter formed by the upper flaps of the base, during the movement of the bases 12. In particular, each side wall 24 has such a curvature as to allow the first portion of each lid, which in practice already rests on the first portion of the corresponding base to be closed, to lift slightly, so that the plane formed by the perimetric edge of the lid is parallel to the plane formed by the upper flaps of the respective base to be closed.

From what has been described above it is therefore evident that the invention achieves the intended aim and objects, and in particular the fact is stressed that a lidding machine for trays and baskets made of deformable material and the like is provided which makes it possible to provide an extremely quick and safe base-lid mating, practically without the intervention of assigned personnel.

In particular, the provision of elastic deformation means, such as for example the squeezing elements, allows the lid to be picked up both to pass through the narrower portion of the lid magazine and to separate completely from the overlying lid.

Moreover, the provision of two parallel conveyances, one for the bases and one for the lids, which meet at an interlocking region, ensures perfect base-lid alignment, preventing the need for a person to check and monitor the mating operation, reducing production costs considerably.

Another advantage of the invention is that the upper abutment belt or belts allow the lid to fix itself detachably to the base, applying a pressure that is adapted to be calibrated according to the rigidity of the belt.

Another advantage of the lidding machine according to the invention is that by means of the head provided with a series of movable elements that support the grip means it is possible to increase the production rate in proportion to the increase in the number of movable elements.

Another advantage of the lidding machine according to the invention is that it allows continuous production, increasing the efficiency of the plant.

Another advantage of the lidding machine according to the invention is that the complementary abutment means create a valid support in the closure of the lids on the bases, even if the thickness of the upper flaps of the bases is not sufficient to ensure adequate rigidity.

Moreover, the provision of a flap that can slide on the surface of the flight allows said means to adapt easily to trays of any height.

In addition to this, the lidding of plastics trays that have thicknesses in the order of a millimeter is facilitated by the compression means that protrude from the upper abutment belt, which by the engagement of the interlocking corners on the corner portion of the perimetric edge of the lid prevent the lid from sagging in its central part.

Another advantage of the invention is that due to the pushing of the bases by the flights, the user is allowed to change the conveyance belt less frequently despite the early wear of the supporting studs provided on the surface of said belt.

Another advantage of the device_according to the invention is due to the internal camber of the contrast side walls, which make it possible, by squeezing the tray slightly, to facilitate the interlocking of the lid with the base.

Moreover, the use of easily commercially available means and the use of commonly used materials make the device economically competitive.

The invention thus conceived is susceptible of numerous modifications and variations, all of which are within the scope of the appended claims.

In practice, the materials used, as well as the dimensions, may be any according to requirements, as long as they are compatible with the constructive purpose.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A lidding machine, for closing bases (12) made of deformable material, such as trays and baskets, with respective lids (9) accommodated in a lid magazine (11), the machine comprising: a supporting frame (2) that supports a conveyor (15) for the advancement of bases (12) to be closed, a pair of side walls (16) for guiding said bases (12) advancing along said conveyor (15) along an advancement direction (20), a chute (17) that forms proximately to points where it meets said side walls (16) an interlocking region (21) for the mating of a first portion of each lid (9) with a first portion of the corresponding base (12) to be closed, and means (18) for conveying the lids (9) to said chute (17), **characterized in that** it further comprises a grip and release head (3) supported on said frame (2) for gripping respective lids (9) accommodated in the lid magazine (11) and for releasing said lids (9) on said lid conveying means (18) that convey said lids (9) to said chute (17), and an upper abutment belt (22) that lies above said conveyor (15) constituted by a conveyor belt (15) so as to push each one of said lids (9) in a sealing direction (25) that is substantially normal to said advancement direction (20) for the complete mating of each said lid (9) with said corresponding base (12) to be closed, said at least one upper abutment belt (22) comprising means (37) for compressing the perimetric edge of each said lid (9) on the upper flaps of a corresponding said base (12) to be closed.

2. The lidding machine according to claim 1, **characterized in that** it comprises at least two contrast side walls (24) for contrasting the perimetric edge of each said lid (9) when said lid (9) is pushed in said sealing direction (25) by said upper abutment belt (22), said at least two contrast side walls (24) guiding said bases (12) along said advancement direction (20).

3. The lidding machine according to claims 1 or 2, **characterized in that** it comprises means (26) for varying the advancement speed of said bases (12) which are provided in association with said conveyor belt (15) for feeding bases (12) thereto.

4. The lidding machine according to claim 2, **characterized in that** said contrast side walls (24) comprise a squeezing element (27) for the side walls of said bases (12).

5. The lidding machine according to any of the preceding claims, **characterized in that** said compression means (37) comprise interlocking corners (38), which are jointly associated with said at least one upper abutment belt (22) and engage substantially the corner portion of said lids (9).

6. The lidding machine according to any of the preceding claims, **characterized in that** it comprises at least one complementary abutment element (28) for the abutment of each said lid (9) on said corresponding base (12) to be closed, for the interlocking of said lids (9) with said bases (12), said at least one complementary abutment element (28) being connected to said conveyor belt (15).

7. The lidding machine according to claim 6, **characterized in that** said at least one complementary abutment element (28) comprises motor means (32) and at least one flight (31) for pushing said bases (12) along said advancement direction (20), which flight is jointly associated with said motor means (32).

8. The lidding machine according to claim 7, **characterized in that** said at least one complementary abutment element (28) comprises height adjustment means (35), which are connected to said at least one flight (31).

9. The lidding machine according to claim 8, **characterized in that** said height adjustment means comprise a movable flap (33), which engages slidingly in a slot (34) along a direction (30) that is normal with respect to said advancement direction (20), said slot (34) being formed in a surface of said at least one flight (31) and said movable flap (33) being coupled, at its lower edge, for sliding on a guiding element (35).

10. The lidding machine according to any of the preceding claims, **characterized in that** it comprises elastic deformation means (7) for separating one lid (9) from the overlying lid (9) in said lid magazine (11), said elastic deformation means (7) being connected to said grip and release head (3) and being controlled by the activation of grip means (4) for gripping said lids (9) which are connected to said grip and release head (3).

11. The lidding machine according to claim 10, **characterized in that** said elastic deformation means comprise at least two squeezing elements (7), which act on opposite sides of said lids (9) and are actuated by movement means (8) connected to said head (3).

12. The lidding machine according to claim 11, **characterized in that** said movement means comprise at least one rotating piston (8), which is actuated by the activation of said grip means (4).

13. The lidding machine according to claim 12, **characterized in that** each one of said squeezing elements (7) comprises a support (5) which is fixed to the rotating head of said rotating piston (8).

14. The lidding machine according to one of the claims 10-13, **characterized in that** said grip and release head (3) comprises lifting and lowering means (6), an oscillating body (13) and at least one movable element (14) which supports said grip means (4), said at least one movable element (14) being connected to said oscillating body (13) by way of said lifting and lowering means (6), said oscillating body (13) having means for rotation about a rotation axis (10) which is substantially parallel to the plane of arrangement of said conveyor belt (15).

15. The lidding machine according to claim 14, **characterized in that** it comprises a series of movable elements (14), in which one is symmetrically opposite the other with respect to said rotation axis (10).

16. The lidding machine according to one of the claims 10-15, **characterized in that** it comprises means for sensing the actuation of said grip means (4) for controlling said elastic deformation means (7).

17. The lidding machine according to of the claims 10-16, **characterized in that** it comprises a time-based control which is activated by the actuation of said grip means (4) and actuates said elastic deformation means (7).

## Patentansprüche

1. Eine Maschine zum Anbringen von Deckeln, zum Verschließen von Basen (12) aus deformierbarem Material, wie zum Beispiel Schalen und Körben, mit entsprechenden Deckeln (9), die in einem Deckelmagazin (11) untergebracht sind, wobei die Maschine Folgendes umfasst: einen Stützrahmen (2), der einen Förderer (15) für den Transport der zu verschließenden Basen (12) trägt, ein Paar von Seitenwänden (16) zum Führen der Basen (12), die sich entlang dem Förderer (15) entlang einer Transportrichtung (20) vorwärts bewegen, eine Rutsche (17), die, nahe an Punkten, an denen sie die Seitenwände (16) trifft, einen Verriegelungsbereich (21) zur Kopplung eines ersten Teils jedes Deckels (9) mit einem ersten Teil der entsprechenden zu verschließenden Basis (12) bildet, und Mittel (18) zur Beförderung der Deckel (9) zu der Rutsche (17), **dadurch gekennzeichnet, dass** sie weiter einen Greif- und Lösungskopf (3) umfasst, getragen an dem Rahmen (2) zum Greifen entsprechender Deckel (9), die in dem Deckelmagazin (11) untergebracht sind, und zum Lösen der Deckel (9) auf den Deckelbeförderungsmitteln (18), welche die Deckel (9) zu der Rutsche (17) befördern, und ein oberes Anschlagband (22), das oberhalb des aus einem Förderband (15) bestehenden Förderers (15) liegt, um jeden der Deckel (9) in eine Abdichtrichtung (25) zu schieben, die im Wesentlichen normal zu der Transportrichtung (20) ist, zur vollständigen Kopplung jedes der Deckel (9) mit der entsprechenden zu verschließenden Basis (12), wobei das mindestens eine obere Anschlagband (22) Mittel (37) umfasst, um die Umfangskante jedes der Deckel (9) auf den oberen Klappen einer entsprechenden zu verschließenden Basis (12) zusammenzudrücken.

2. Die Maschine zum Anbringen von Deckeln gemäß Anspruch 1, **dadurch gekennzeichnet, dass** sie mindestens zwei Kontrast-Seitenwände (24) umfasst, zum Widerstand gegen die Umfangskante jedes Deckels (9), wenn der Deckel (9) von dem oberen Anschlagband (22) in die Abdichtrichtung (25) geschoben wird, wobei die mindestens zwei Kontrast-Seitenwände (24) die Basen (12) entlang der Transportrichtung (20) führen.

3. Die Maschine zum Anbringen von Deckeln gemäß Anspruch 1 oder 2, **dadurch gekennzeichnet, dass** sie Mittel (26) umfasst, um die Transportgeschwindigkeit der Basen (12) zu variieren, die in Verbindung mit dem Förderband (15) zum Zuführen von Basen (12) dazu bereitgestellt werden.

4. Die Maschine zum Anbringen von Deckeln gemäß Anspruch 2, **dadurch gekennzeichnet, dass** die Kontrast-Seitenwände (24) ein Presselement (27) für die Seitenwände der Basen (12) umfassen.

5. Die Maschine zum Anbringen von Deckeln gemäß einem beliebigen der obigen Ansprüche, **dadurch gekennzeichnet, dass** die Mittel (37) zum Zusammendrücken Verriegelungsecken (38) umfassen, die fest mit dem mindestens einen oberen Anschlagband (22) verbunden sind und im Wesentlichen in den Eckabschnitt der Deckel (9) eingreifen.

6. Die Maschine zum Anbringen von Deckeln gemäß einem beliebigen der obigen Ansprüche, **dadurch gekennzeichnet, dass** sie mindestens ein komplementäres Anschlagelement (28) für den Anschlag jedes der Deckel (9) an der jeweiligen zu schließende Basis (12), für die Verriegelung der Deckel (9) mit den Basen (12), umfasst, wobei das mindestens eine komplementäre Anschlagelement (28) mit dem Förderband (15) verbunden ist.

7. Die Maschine zum Anbringen von Deckeln gemäß Anspruch 6, **dadurch gekennzeichnet, dass** das mindestens eine komplementäre Anschlagelement (28) Motormittel (32) und mindestens eine Schaufel (31) zum Schieben der Basen (12) entlang der Transportrichtung (20) umfasst, wobei die Schaufel fest mit den Motormitteln (32) verbunden ist.

8. Die Maschine zum Anbringen von Deckeln gemäß Anspruch 7, **dadurch gekennzeichnet, dass** das mindestens eine komplementäre Anschlagelement (28) Höheneinstellmittel (35) umfasst, die mit der mindestens einen Schaufel (31) verbunden sind.

9. Die Maschine zum Anbringen von Deckeln gemäß Anspruch 8, **dadurch gekennzeichnet, dass** die Höheneinstellmittel eine bewegliche Klappe (33) umfassen, die verschiebbar in einen Schlitz (34) entlang einer Richtung (30) eingreift, welche normal zu der Transportrichtung (20) ist, wobei der Schlitz (34) in einer Oberfläche der mindestens einen Schaufel (31) geformt ist und die bewegliche Klappe (33) an ihrer unteren Kante zum Gleiten an einem Fuhrungselement (35) gekoppelt ist.

10. Die Maschine zum Anbringen von Deckeln gemäß einem beliebigen der obigen Ansprüche, **dadurch gekennzeichnet, dass** sie elastische Verformungsmittel (7) zum Trennen eines Deckels (9) vom darüber liegenden Deckel (9) in dem Deckelmagazin (11) umfasst, wobei die elastischen Verformungsmittel (7) mit dem Greif und Lösungskopf (3) verbunden sind und durch Aktivierung von Greifmitteln (4) zum Greifen der Deckel (9) gesteuert werden, welche mit dem Greif- und Lösungskopf (3) verbunden sind.

11. Die Maschine zum Anbringen von Deckeln gemäß Anspruch 10, **dadurch gekennzeichnet, dass** die elastischen Verformungsmittel mindestens zwei Presselemente (7) umfassen, welche auf gegenüberliegende Seiten der Deckel (9) einwirken und von Bewegungsmitteln (8) aktiviert werden, die mit dem Kopf (3) verbunden sind.

12. Die Maschine zum Anbringen von Deckeln gemäß Anspruch 11, **dadurch gekennzeichnet, dass** die Bewegungsmittel mindestens einen Drehkolben (8) umfassen, der durch Aktivierung der Greifmittel (4) betätigt wird.

13. Die Maschine zum Anbringen von Deckeln gemäß Anspruch 12, **dadurch gekennzeichnet, dass** jedes der Presselemente (7) einen Träger (5) umfasst, der am Drehkopf des Drehkolbens (8) befestigt ist.

14. Die Maschine zum Anbringen von Deckeln gemäß einem beliebigen der Ansprüche 10-13, **dadurch gekennzeichnet, dass** der Greif- und Lösungskopf (3) Hebe- und Senkmittel (6), einen Schwingungskörper (13) und mindestens ein bewegliches Element (14) umfasst, das die Greifmittel (4) trägt, wobei das mindestens eine bewegliche Element (14) durch die Hebe- und Senkmittel (6) mit dem Schwingungskörper (13) verbunden ist und der Schwingungskörper (13) Mittel zum Drehen um eine Drehachse (10) hat, die im Wesentlichen parallel zur Anordnungsebene des Förderbandes (15) ist.

15. Die Maschine zum Anbringen von Deckeln gemäß Anspruch 14, **dadurch gekennzeichnet, dass** sie eine Reihe beweglicher Elemente (14) umfasst, in der eines, bezogen auf die Drehachse (10), dem anderen symmetrisch gegenüberliegt.

16. Die Maschine zum Anbringen von Deckeln gemäß einem der Ansprüche 10-15, **dadurch gekennzeichnet, dass** sie Mittel zur Erfassung der Aktivierung der Greifmittel (4) zur Steuerung der elastischen Verformungsmittel (7) umfasst.

17. Die Maschine zum Anbringen von Deckeln gemäß einem der Ansprüche 10-16, **dadurch gekennzeichnet, dass** sie eine Steuerung auf Zeitbasis umfasst, die durch Betätigung der Greifmittel (4) aktiviert wird und die elastischen Verformungsmittel (7) betätigt.

## Revendications

1. Machine de fermeture pour fermer des récipients (12) faits d'un matériau déformable, comme des plateaux et des paniers, avec des couvercles respectifs (9) présents dans un magasin à couvercles (11), la machine comprenant : un cadre de support (2) qui supporte un convoyeur (15) pour l'avance des récipients (12) à fermer, une paire de parois latérales (16) pour guider lesdits emballages (12) avançant le long dudit convoyeur (15) le long d'une direction d'avance (20), une goulotte (17) qui forme à proximité de points où elle rencontre lesdites parois latérales (16) une région de verrouillage réciproque (21) pour l'accouplement d'une première partie de chaque couvercle (9) avec une première partie du récipient correspondant (12) à fermer, et un moyen (18) pour transporter les couvercles (9) jusqu'à ladite goulotte (17), **caractérisée en ce qu'**elle comprend en outre une tête de préhension et de libération (3) supportée par ledit cadre (2) pour saisir les couvercles respectifs (9) présents dans le magasin à couvercles (11) et pour relâcher lesdits couvercles (9) sur ledit moyen de transport de couvercles (18) qui transporte lesdits couvercles (9) jusqu'à ladite goulotte (17), et une courroie de butée supérieure (22) qui se trouve au dessus dudit convoyeur (15) constitué par une bande transporteuse (15) afin de pousser chacun desdits couvercles (9) dans une direction de scellement (25) qui est substantiellement normale à ladite direction d'avance (20) pour l'emboîtement complet de chacun desdits couvercles (9) avec ledit récipient correspondant (12) à fermer, ladite au moins une courroie de butée supérieure (22) comprenant un moyen (37) pour compresser le bord périphérique de chaque couvercle (9) sur les rebords supérieurs d'un récipient correspondant (12) à fermer.

2. Machine de fermeture selon la revendication 1, **caractérisée en ce qu'**elle comprend au moins deux parois latérales de contraste (24) pour faire ressortir le bord périphérique de chacun desdits couvercles (9) quand ledit couvercle (9) est poussé dans ladite direction de scellement (25) par ladite courroie de butée supérieure (22), lesdites au moins deux parois latérales de contraste (24) guidant lesdits récipients (12) le long de ladite direction d'avance (20).

3. Machine de fermeture selon la revendication 1 ou 2, **caractérisée en ce qu'**elle comprend un moyen (26) pour faire varier la vitesse d'avance desdits récipients (12) qui sont fournis en association avec ladite bande transporteuse (15) pour amener des récipients (12) sur celle-ci.

4. Machine de fermeture selon la revendication 2, **caractérisée en ce que** lesdites parois latérales de contraste (24) comprennent un élément presseur (27) pour les parois latérales desdits récipients (12).

5. Machine de fermeture selon l'une quelconque des revendications précédentes, **caractérisée en ce que** ledit moyen de compression (37) comprend des angles de verrouillage réciproque (38), qui sont associés de façon jointe à ladite au moins une courroie de butée supérieure (22) et qui se mettent en prise substantiellement avec la partie d'angle desdits couvercles (9).

6. Machine de fermeture selon l'une quelconque des revendications précédentes, **caractérisée en ce qu'**elle comprend au moins un élément de butée complémentaire (28) pour permettre l'appui de chacun desdits couvercles (9) sur ledit récipient correspondant (12) à fermer, pour le verrouillage réciproque desdits couvercles (9) avec lesdits récipients (12), ledit au moins un élément de butée complémentaire (28) étant connecté à ladite bande transporteuse (15).

7. Machine de fermeture selon la revendication 6, **caractérisée en ce que** ledit au moins un élément de butée complémentaire (28) comprend un moyen à moteur (32) et au moins un déflecteur (31) pour pousser lesdits récipients (12) le long de ladite direction d'avance (20), lequel déflecteur est associé de façon jointe audit moyen à moteur (32).

8. Machine de fermeture selon la revendication 7, **caractérisée en ce que** ledit au moins un élément de butée complémentaire (28) comprend un moyen de réglage de hauteur (35) qui est connecté audit au moins un déflecteur (31).

9. Machine de fermeture selon la revendication 8, **caractérisée en ce que** ledit moyen de réglage de hauteur comprend un volet mobile (33), qui s'engage de façon glissante dans une fente (34) le long d'une direction (30) qui est normale par rapport à ladite direction d'avance (20), ladite fente (34) étant formée dans une surface dudit au moins un déflecteur (31) et ledit volet mobile (33) étant couplé, au niveau de son bord inférieur, pour glisser sur un élément de guidage (35).

10. Machine de fermeture selon l'une quelconque des revendications précédentes, **caractérisée en ce qu'**elle comprend un moyen de déformation élastique (7) pour séparer un couvercle (9) du couvercle du dessus (9) dans ledit magasin à couvercles (11), ledit moyen de déformation élastique (7) étant connecté à ladite tête de préhension et de libération (3) et étant commandé par l'activation d'un moyen de préhension (4) pour saisir lesdits couvercles (9) qui sont connectés à ladite tête de préhension et de libération (3).

11. Machine de fermeture selon la revendication 10, **caractérisée en ce que** ledit moyen de déformation élastique comprend au moins deux éléments presseurs (7), qui agissent sur des côtés opposés desdits couvercles (9) et qui sont actionnés par un moyen de déplacement (8) connecté à ladite tête (3).

12. Machine de fermeture selon la revendication 11, **caractérisée en ce que** ledit moyen de déplacement comprend au moins un piston rotatif (8), qui est actionné par l'activation dudit moyen de préhension (4).

13. Machine de fermeture selon la revendication 12, **caractérisée en ce que** chacun desdits éléments presseurs (7) comprend un support (5) qui est fixé à la tête rotative dudit piston rotatif (8).

14. Machine de fermeture selon l'une des revendications 10 à 13, **caractérisée en ce que** ladite tête de préhension et de libération (3) comprend un moyen de levage et d'abaissement (6), un corps oscillant (13) et au moins un élément mobile (14) qui supporte ledit moyen de préhension (4), ledit au moins un élément mobile (14) étant connecté audit corps oscillant (13) à l'aide dudit moyen de levage et d'abaissement (6), ledit corps oscillant (13) comportant un moyen permettant la rotation autour d'un axe de rotation (10) qui est substantiellement parallèle au plan d'agencement de ladite bande transporteuse (15).

15. Machine de fermeture selon la revendication 14, **caractérisée en ce qu'**elle comprend une série d'éléments mobiles (14), dans laquelle un élément est symétriquement opposé à l'autre par rapport audit axe de rotation (10).

16. Machine de fermeture selon l'une des revendications 10 à 15, **caractérisée en ce qu'**elle comprend un moyen pour détecter l'actionnement dudit moyen de préhension (4) pour commander ledit moyen de déformation élastique (7).

17. Machine de fermeture selon l'une des revendications 10 à 16, **caractérisée en ce qu'**elle comprend une commande basée sur le temps qui est activée par l'actionnement dudit moyen de préhension (4) et qui actionne ledit moyen de déformation élastique (7).
